# EUROPEAN PATENT APPLICATION

(11) **EP 2 056 604 A1**
(43) Date of publication of application: **06.05.2009**
(21) Application number: 08158126.6
(22) Date of filing: 12.06.2008
(51) Int. Cl.: H04N 7/173

(54) **Method for providing broadcast-related information and display apparatus using the same**

(30) Priority: 30.10.2007 KR 20070109812
(71) Applicant: Samsung Electronics Co., Ltd., Suwon-si Gyeonggi-do 443-742 (KR)
(72) Inventor: Jo, Sung-baik, Yeontongdong, Suwon-si, Gyeonggi-do (KR); Kim, Ji-eun, Yongin-si, Gyeonggi-do (KR); Park, Ji-hyun, Seoul (KR); Kim, Il-Kwon, Suwon-si, Gyeonggi-do (KR)
(74) Representative: Davies, Robert Ean

(57) **Abstract**

A method for providing broadcast-related information and a display apparatus using the method are provided. The method for providing broadcast-related information comprises receiving (S310) additional information regarding a broadcast contained in a broadcast signal from a broadcast receiving apparatus, acquiring (S330) broadcast-related information from a connected network using the additional information, and displaying (S360) the acquired broadcast-related information. Therefore, it is possible to provide a user with richer broadcast-related information without any additional effort.

## Description

Methods and apparatuses consistent with the present invention relate to a display apparatus, and more particularly, but not exclusively, to a display apparatus which provides a user with useful information.

The recent development of broadcasting technologies and video compression technologies has led to the emergence of digital broadcasting capable of providing users with broadcasts and additional information regarding the broadcasts. Users may be provided with broadcast-related information such as the title, time and plot of the broadcasts based on the additional information.

Such additional information transmitted together with broadcast signals contains only basic information regarding broadcasts and lacks more detailed information.

Accordingly, users may frequently be dissatisfied with the additional information. In this situation, users need to acquire desired information by searching the Internet using personal computers (PCs), which causes inconvenience. Additionally, it is difficult for users to acquire desired broadcast-related information directly and in a timely manner.

Embodiments of the present invention aim to overcome the above disadvantages and other disadvantages not described above. Also, embodiments of the present invention are not required to overcome the disadvantages described above, and an embodiment of the present invention may not overcome any of the problems described above.

According to an aspect of the present invention, there is provided a method for providing broadcast-related information and a display apparatus using the method, in which the broadcast-related information is automatically acquired from a connected network using additional information regarding a broadcast contained in a broadcast signal, so that the acquired broadcast-related information may be provided to a user directly and in a timely manner, and without any additional effort.

According to another aspect of the present invention, there is provided a method for providing broadcast-related information of a display apparatus, the method comprising receiving additional information regarding a broadcast contained in a broadcast signal from a broadcast receiving apparatus; acquiring broadcast-related information from a connected network using the additional information; and displaying the acquired broadcast-related information.

The acquiring may further comprise connecting to a content provider using information regarding the content provider contained in the additional information and requesting the broadcast-related information; and receiving the requested broadcast-related information.

The acquiring may further comprise generating a search term based on content contained in the additional information; and performing a search via the network using the generated search term to acquire the broadcast-related information.

The method may further comprise receiving a search term input by a user; and performing a search via the network using the search term input by the user to acquire the broadcast-related information.

The displaying may further comprise storing the acquired broadcast-related information; and if a user requests the broadcast-related information, displaying the stored broadcast-related information.

The displaying may be performed while the broadcast is displayed on the broadcast receiving apparatus.

The network may be the Internet.

According to another aspect of the present invention, there is provided a display apparatus comprising a display; a first interface which receives additional information regarding a broadcast contained in a broadcast signal from a broadcast receiving apparatus; a second interface which is connected to a network; and a controller which acquires broadcast-related information from the network connected to the second interface using the additional information received via the first interface, and displays the acquired broadcast-related information on the display.

The controller may connect to a content provider using information regarding the content provider contained in the additional information, request the broadcast-related information, and receive the requested broadcast-related information.

The controller may generate a search term based on content contained in the additional information, and perform a search via the network using the generated search term to acquire the broadcast-related information.

The controller may perform a search via the network using a search term input by a user to acquire the broadcast-related information.

The display apparatus may further comprise a storage unit, which stores the acquired broadcast-related information. If the user requests the broadcast-related information, the controller may display the broadcast-related information stored in the storage unit.

The controller may display the acquired broadcast-related information on the display while the broadcast is displayed on the broadcast receiving apparatus.

The network may be the Internet.

For a better understanding of the invention, and to show how embodiments of the same may be carried into effect, reference will now be made, by way of example, to the accompanying diagrammatic drawings in which:
FIG. 1 is a block diagram of a system to which the present invention is applicable;
FIG. 2 is a detailed block diagram of a secondary display shown in FIG. 1; and
FIG. 3 is a flowchart explaining a method for providing broadcast-related information according to an exemplary embodiment of the present invention.

Certain embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that embodiments of the present invention can be carried out without those specifically defined matters. Also, well-known functions or constructions are not described in detail since they would obscure the invention with unnecessary detail.

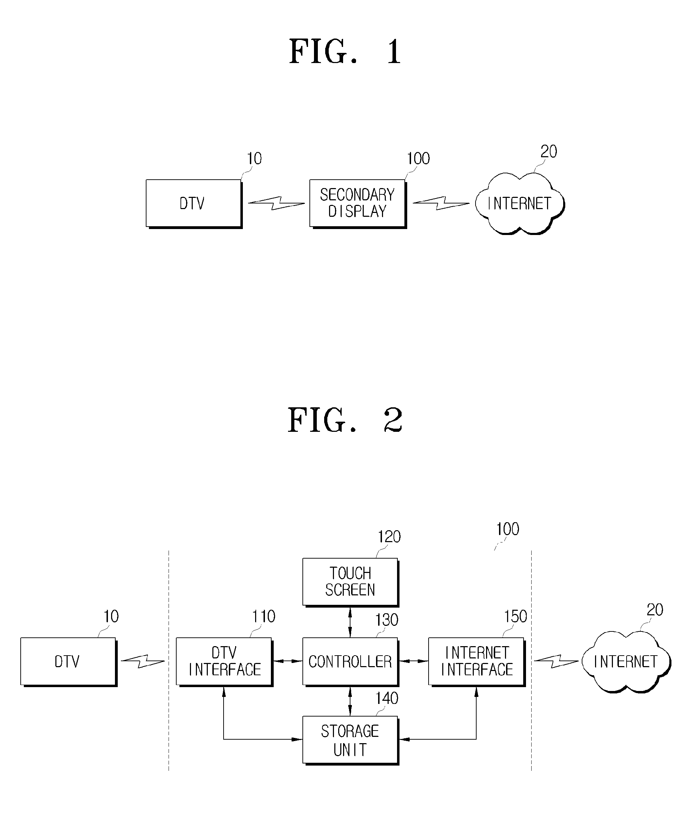

FIG. 1 is a block diagram of a system to which the present invention is applicable. The system of FIG. 1 is configured by connecting a digital television (DTV) 10 and a secondary display 100 to enable wireless mutual communication therebetween. Additionally, the secondary display 100 is connected wirelessly to the Internet 20.

The secondary display 100 may have a size suitable for a user to hold and manually operate the secondary display 100 in his or her hand, for example approximately 7 inches or less, but embodiments of the present invention are not limited thereto.

The DTV 10 provides additional broadcast information contained in a currently received broadcast signal to the secondary display 100. The secondary display 100 then collects a variety of broadcast-related information via the Internet 20 using the received additional broadcast information, and provides the user with the collected information.

FIG. 2 is a detailed block diagram of the secondary display 100 shown in FIG. 1. In order to facilitate understanding of embodiments of the present invention, the DTV 10 and Internet 20 are also shown in FIG. 2.

The secondary display 100 of FIG. 2 comprises a DTV interface 110, a touch screen 120, a controller 130, a storage unit 140 and an Internet interface 150.

The DTV interface 110 is connected to the DTV 10 so that wireless communication may be performed therebetween.

The touch screen 120 functions to display information to be provided to the user, and to receive user commands input by touch.

The Internet interface 150 is connected wirelessly to the Internet 20, to perform communication therebetween.

The storage unit 140 is a recording medium on which information required to operate the secondary display 100 is stored.

The controller 130 controls the entire operation of the secondary display 100 according to the user commands input via the touch screen 120.

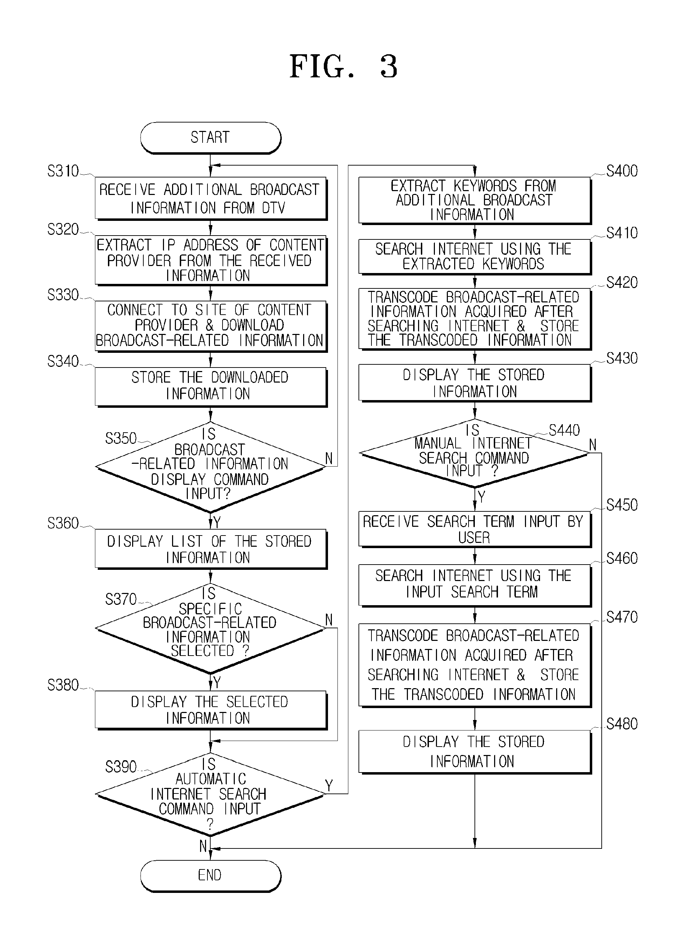

The controller 130 controls the broadcast-related information provided by the DTV 10 to be displayed on the touch screen 120. This operation will be described in detail with reference to FIG. 3.

FIG. 3 is a flowchart explaining a method for providing broadcast-related information according to an exemplary embodiment of the present invention.

As shown in FIG. 3, if the DTV 10 separates the additional broadcast information from the currently received broadcast signal and transmits the separated information to the secondary display 100, the controller 130 of the secondary display 100 may receive the additional broadcast information from the DTV 10 via the DTV interface 110 (operation S310).

The additional broadcast information includes information regarding the broadcast, such as the title, time, cast, plot and image quality of the broadcast. Additionally, the additional broadcast information includes information regarding the broadcast content provider, which includes an information provider (IP) address for the content provider.

The controller 130 may extract the IP address for the content provider from the received additional broadcast information (operation S320). The controller 130 may then connect to a site of the content provider using the extracted IP address and download broadcast-related information (operation S330). Subsequently, the controller 130 may store the downloaded broadcast-related information in the storage unit 140 (operation S340).

Next, if the user inputs a command to display the broadcast-related information through the touch screen 120 (operation S350-Y), the controller 130 may display on the touch screen 120 a list of the broadcast-related information stored in the storage unit 140 (operation S360). However, if a command to display broadcast related information is not input, operations S310 to S340 are conducted again (operation S350-N).

If the user selects specific broadcast-related information from the list displayed on the touch screen 120 (operation S370-Y), the controller 130 may read the selected broadcast-related information from the storage unit 140 and display the read information on the touch screen 120 (operation S380). However, if specific broadcast-related information is not selected, operation S380 is bypassed (operation S370-N).

Additionally, if the user enters an automatic Internet search command via the touch screen 120 (operation S390-Y), the controller 130 may control the secondary display 100 to perform operations S400 to S430. However, if an automatic internet search command is not input, the process is ended (operation S390-N).

Here, the automatic Internet search command refers to a user command, which enables the secondary display 100 to automatically search for the broadcast-related information on the Internet 20.

In order to automatically search the Internet, the controller 130 may extract keywords from the additional broadcast information received in operation S310 (operation S400). Specifically, during operation S400, the controller 130 may extract keywords from the information regarding the broadcast, such as the title, cast and plot of the broadcast, contained in the additional broadcast information.

The controller 130 may then search the Internet 20 using the extracted keywords (operation S410). In more detail, the controller 130 may search for the keywords using a search site on the Internet 20 connected to the controller 130 via the Internet interface 150, and may receive a search result as a response to the search.

The controller 130 may transcode the broadcast-related information acquired after searching the Internet, and may then store the transcoded information in the storage unit 140 (operation S420). Here, transcoding is converting the broadcast-related information received over the Internet 20 into a format suitable for a browser used by the controller 130.

The controller 130 may display the broadcast-related information stored in the storage unit 140 on the touch screen 120 as a result of automatically searching the Internet (operation S430).

Alternatively, if the user inputs a manual Internet search command through the touch screen 120 (operation S440-Y), the controller 130 may control the secondary display 100 to perform operations S450 to S480. However, if a user does not input a manual Internet search command, then the process is ended (operation S440-N).

In this situation, the manual Internet search command refers to a user command to search for broadcast-related information over the Internet 20 using keywords which the user manually inputs.

In order to manually search the Internet, the controller 130 may provide the user with a search-term input means on the touch screen 120, so that the user may input a search term using the search-term input means (operation S450).

The controller 130 may then search the Internet 20 using the input search term (operation S460). Specifically, in operation S460, the controller 130 may search for the search term using a search site on the Internet 20 connected to the controller 130 via the Internet interface 150, and may receive a search result as a response to the search.

Subsequently, the controller 130 may transcode the broadcast-related information acquired after searching the Internet, and store the transcoded information in the storage unit 140 (operation S470). The controller 130 may display on the touch screen 120 the broadcast-related information stored in the storage unit 140 as a result of manually searching the Internet (operation S480).

The process by which the secondary display 100 used as a display apparatus provides the broadcast-related information has been described in detail according to the exemplary embodiment of the present invention.

The secondary display 100 uses the additional broadcast information received from the DTV 10 in an exemplary embodiment of the present invention. Here, the additional broadcast information is additional information pertaining to the broadcast contained in the broadcast signal. Accordingly, information having a format and a name differing from the additional broadcast information but relating to the additional information pertaining to the broadcast may be replaced with the additional information pertaining to the broadcast.

Additionally, although searching for broadcast-related information is performed on the Internet 20 in an exemplary embodiment of the present invention, the Internet 20 is merely exemplary of a network connected to the secondary display 100. Accordingly, the present invention is applicable to a situation in which the broadcast-related information is found via a network other than the Internet 20.

Furthermore, the secondary display 100 provides the broadcast-related information while the broadcast is being displayed on the DTV 10 in an exemplary embodiment of the present invention, so it is possible to simultaneously provide a user with both the broadcast and the broadcast-related information.

Moreover, in order to facilitate understanding of an embodiment of the present invention, the user may be provided with the broadcast-related information provided by the site of the content provider, the broadcast-related information acquired by automatically searching the Internet and the broadcast-related information acquired by manually searching the Internet, in sequence. However, the above broadcast-related information may be provided to the user in a sequence other than the above sequence, or only some of the above broadcast-related information may be provided to the user.

Accordingly, it is possible to provide only the broadcast-related information acquired by automatically searching the Internet without providing the broadcast-related information provided by the site of the content provider.

Additionally, although the secondary display 100 according to an embodiment of the present invention displays the broadcast-related information on the touch screen 120, the broadcast-related information may be displayed on a display other than the touch screen 120.

As described above, according to an embodiment of the present invention, it is possible to automatically obtain broadcast-related information using additional information regarding a broadcast contained in a broadcast signal from a connected network. Therefore, a user may be provided with richer broadcast-related information without any additional effort. Additionally, the user may acquire desired broadcast-related information directly and in a timely manner.

The foregoing embodiments and advantages are merely exemplary and are not to be construed as limiting the present invention. The present teaching can be readily applied to other types of apparatuses. Also, the description of the embodiments of the present invention is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for providing broadcast-related information of a display apparatus, the method comprising:
receiving (S310) additional information regarding a broadcast contained in a broadcast signal from a broadcast receiving apparatus;
acquiring (S330) broadcast-related information from a connected network using the additional information; and
displaying (S360) the acquired broadcast-related information.

2. The method as claimed in claim 1, wherein the acquiring comprises:
connecting (S330) to a content provider using information regarding the content provider contained in the additional information and requesting the broadcast-related information; and
receiving the requested broadcast-related information.

3. The method as claimed in claim 1 or 2, wherein the acquiring comprises:
generating a search term based on content contained in the additional information; and
performing a search via the network using the generated search term to acquire the broadcast-related information.

4. The method as claimed in any one of claims 1 to 3, further comprising:
receiving (S450) a search term input by a user; and
performing (S460) a search via the network using the search term input by the user to acquire the broadcast-related information.

5. The method as claimed in any one of claims 1 to 4, wherein the displaying comprises:
storing (S340) the acquired broadcast-related information; and
if a user requests the broadcast-related information, displaying (S360) the stored broadcast-related information.

6. The method as claimed in any one of claims 1 to 5, wherein the displaying is performed while the broadcast is displayed on the broadcast receiving apparatus.

7. The method as claimed in any one of claims 1 to 6, wherein the network is the Internet.

8. A display apparatus comprising (100):
a display;
a first interface (110) which receives additional information regarding a broadcast contained in a broadcast signal from a broadcast receiving apparatus (10);
a second interface (150) which is connected to a network (20); and
a controller (130) which acquires broadcast-related information from the network connected to the second interface using the additional information received via the first interface, and displays the acquired broadcast-related information on a display.

9. The display apparatus as claimed in claim 8, wherein the controller connects to a content provider using information regarding the content provider contained in the additional information, requests the broadcast-related information, and receives the requested broadcast-related information.

10. The display apparatus as claimed in claim 8 or 9, wherein the controller generates a search term based on content contained in the additional information, and performs a search via the network using the generated search term to acquire the broadcast-related information.

11. The display apparatus as claimed in any one of claims 8 to 10,
wherein the controller performs a search via the network using a search term input by a user to acquire the broadcast-related information.

12. The display apparatus as claimed in any one of claims 8 to 11, further comprising a storage unit (140) which stores the acquired broadcast-related information,
wherein the controller displays the broadcast-related information stored in the storage unit, if the user requests the broadcast-related information.

13. The display apparatus as claimed in any one of claims 8 to 12, wherein the controller displays the acquired broadcast-related information on the display while the broadcast is displayed on the broadcast receiving apparatus.

14. The display apparatus as claimed in any one of claims 8 to 13, wherein the network is the Internet.
